# EUROPÄISCHE PATENTSCHRIFT

(11) **EP 1 179 443 B1**
(45) Veröffentlichungstag und Bekanntmachung des Hinweises auf die Patenterteilung: **31.05.2006**
(21) Anmeldenummer: 01117163.4
(22) Anmeldetag: 14.07.2001
(51) Int. Cl.: B60J 7/22

(54) **Windschott**
Wind deflector
Protecteur de vent

(30) Priorität: 09.08.2000 DE 10038714
(43) Veröffentlichungstag der Anmeldung: 13.02.2002
(73) Patentinhaber: ORIS FAHRZEUGTEILE HANS RIEHLE GmbH, 71696 Möglingen (DE)
(72) Erfinder: Lemperle, Martin, 71642 Ludwigsburg (DE); Neumann, Peter, 71720 Oberstenfeld (DE); Riehle, Jörg, 70439 Stuttgart (DE)
(74) Vertreter: Beck, Jürgen

(56) Entgegenhaltungen:
- DE-A- 19 616 448

## Beschreibung

Die Erfindung betrifft ein Windschott für Cabriofahrzeuge, umfassend einen aus mindestens zwei Rahmenteilen gebildeten Rahmen, zwei die Rahmenteile verbindende Scharniere, deren Drehachsen koaxial zu einer gemeinsamen Klappachse des Rahmens angeordnet sind, und eine eine von dem Rahmen umschlossene Rahmenöffnung abdeckende und durch Aufnahmen an dem Rahmen aufgespannt gehaltene Flachmaterialbahn.

Derartige Windschotts sind beispielsweise aus der DE 196 16 448 bekannt, wobei das Problem besteht, daß beim Klappen der Rahmenteile im Bereich der Klappachse Relativbewegungen zwischen der Flachmaterialbahn und dem Rahmen beim Klappen der Rahmenteile auftreten, die durch Aussparungen der Flachmaterialbahn im Bereich der Scharniere zugelassen werden.

Der Erfindung liegt daher die Aufgabe zugrunde, ein Windschott der gattungsgemäßen Art derart zu verbessern, daß derartige Aussparungen nicht notwendig sind.

Diese Aufgabe wird bei einem Windschott der eingangs beschriebenen Art erfindungsgemäß dadurch gelöst, daß an jedem Rahmenteil eine Führungskante für die Flachmaterialbahn vorgesehen ist, über welche die Flachmaterialbahn hinweg verläuft und welche den sich in diesem Rahmenteil erstreckenden Teilbereich der Flachmaterialbahn in einer seitlich an den Rahmen angrenzenden Aufspannfläche hält, und daß jede der Aufspannflächen im wesentlichen durch die Klappachse hindurch verläuft.

Dadurch, daß die Aufspannflächen bei der erfindungsgemäßen Lösung so verlaufen, daß sie seitlich des Rahmens liegen und außerdem durch die Klappachse hindurch verlaufen, werden Relativbewegungen der Flachmaterialbahn relativ zum Scharnier im Bereich der Klappachse vermieden, so daß die Aussparungen, die aus dem Stand der Technik bekannt sind, nicht mehr erforderlich werden und folglich die Flachmaterialbahn bis unmittelbar an die Scharniere hingezogen werden kann.

Eine besonders günstige Variante des erfindungsgemäßen Windschotts sieht dabei vor, daß jedes Scharnier zwei Scharnierteile mit drehbar aneinander geführten Lagerelementen und mit sich ausgehend von den Lagerelementen erstreckenden Ansatzstücken aufweist, die an den Rahmenflügeln fixierbar sind.

Ferner sieht eine optisch besonders ansprechende Lösung des erfindungsgemäßen Windschotts vor, daß die Ansatzstücke einen im wesentlichen identischen Querschnitt aufweisen und bei aufgeklapptem Rahmen miteinander fluchtend angeordnet sind.

Hinsichtlich der Ausbildung der Lagerelemente wurden bislang keine näheren Angaben gemacht. So sieht ein vorteilhaftes Ausführungsbeispiel vor, daß die Lagerelemente im Bereich einer Lagerfläche aneinander anliegen.

Hinsichtlich der Ausbildung der Scharnierteile wurden bislang keine näheren Angaben gemacht. So sieht ein vorteilhaftes Ausführungsbeispiel vor, daß an einem inneren Scharnierteil das Ansatzstück ein der Rahmenöffnung zugewandtes, innenliegendes Lagerelement trägt und an einem äußeren Scharnierteil das Ansatzstück ein der Rahmenöffnung abgewandtes außenliegendes Lagerelement trägt.

Hinsichtlich der Ausbildung der Rahmenteile selbst wurden bislang keine näheren Angaben gemacht. So sieht ein vorteilhaftes Ausführungsbeispiel vor, daß die Rahmenteile aus einem Hohlprofil gebildet sind und daß die Scharnierteile mit Fortsätzen in das Hohlprofil eingesteckt sind.

Hinsichtlich des Verlaufs der Führungskante an den Rahmenteilen wurden im Zusammenhang mit der bisherigen Erläuterung der einzelnen Ausführungsbeispiele keine näheren Angaben gemacht. So sieht ein vorteilhaftes Ausführungsbeispiel vor, daß die Führungskante an einer der Rahmenöffnung zugewandten Innenseite der Rahmenteile verläuft.

Damit ist eine besonders einfache und günstige Führung der Flachmaterialbahn gewährleistet.

Besonders günstig ist dies, wenn die Führungskante im wesentlichen an die von den Rahmenteilen umschlossene Rahmenöffnung angrenzt.

Um die Flachmaterialbahn auch im Bereich der Scharnierteile zu führen, ist vorzugsweise vorgesehen, daß sich die Führungskante der Rahmenteile in einer Führungskante der Scharnierteile fortsetzt.

Besonders vorteilhaft ist die Flachmaterialbahn dann geführt, wenn sich bei dem inneren Scharnierteil die Führungskante über das Ansatzstück und das Lagerelement hinweg fortsetzt.

Eine besonders zweckmäßige Führung der Flachmaterialbahn ist dann erreicht, wenn die Führungskante bis zu einer Trennfuge zwischen dem Lagerelement des inneren Scharnierteils und dem Ansatzstück des äußeren Scharnierteils verläuft, so daß lediglich eine Unterbrechung der Führung der Flachmaterialbahn an der Trennfuge erfolgt.

Um bei aufgeklapptem Rahmen eine optisch einwandfreie Ausrichtung der Flachmaterialbahn zu erreichen, ist vorzugsweise vorgesehen, daß die durch die beiden Scharnierteile beiderseits der Trennfuge gebildeten Führungskanten bei aufgeklapptem Rahmen miteinander fluchtend ausgerichtet sind, so daß auch im Bereich der Scharnierteile die Teilbereiche der Flachmaterialbahn fluchtend ineinander übergehen.

Um die Führungskante im Bereich der Scharnierteile realisieren zu können, ist es besonders günstig, wenn die Scharnierteile mit die Führungskanten bildenden Kantenelementen versehen sind.

Vorzugsweise sind dabei die Kantenelemente an einer der Rahmenöffnung zugewandten Innenseite der Scharnierteile angeordnet.

Eine besonders günstige Anordnung sieht vor, daß die durch die Kantenelemente gebildeten Führungskanten beider zusammengehöriger Scharnierteile bis zur Trennfuge verlaufen.

Zweckmäßigerweise ist dabei vorgesehen, daß die von dem Kantenelement des inneren Scharnierteils gebildete Führungskante die Drehachse des Scharniers nahezu berührend verläuft, so daß durch diese Führungskante die Flachmaterialbahn so gehalten wird, daß sie durch die Drehachse hindurch verläuft.

Hinsichtlich der Art der Anordnung der Kantenelemente an den Scharnierteilen wurden bislang keine näheren Angaben gemacht. So sieht ein besonders vorteilhaftes Ausführungsbeispiel vor, daß die Kantenelemente an den Scharnierteilen fixierbar sind. Besonders günstig ist es dabei, wenn die Kantenelemente an den Scharnierteilen verrastbar sind, so daß sich diese in einfacher Weise auf die Scharnierteile aufsetzen lassen.

Hinsichtlich der Art der Fixierung der Flachmaterialbahn im Bereich des Scharniers ist es besonders günstig, wenn die Flachmaterialbahn im Bereich jedes Scharniers zwischen dem jeweiligen Kantenelement und dem entsprechenden Scharnierteil einklemmbar ist.

Dieses Einklemmen der Flachmaterialbahn erfolgt besonders günstig dadurch, daß das Kantenelement selbst am jeweiligen Scharnierteil fixierbar ist.

Hinsichtlich der Fixierung der Flachmaterialbahn wurden im Zusammenhang mit der bisherigen Erläuterung der einzelnen Ausführungsbeispiele keine näheren Angaben gemacht. So ist es besonders günstig, wenn sich in den Rahmenteilen an die Führungskante eine Aufnahmenut anschließt, in welcher die Flachmaterialbahn mittels eines Keders fixierbar ist.

Weitere Merkmale und Vorteile der Erfindung sind Gegenstand der nachfolgenden Beschreibung sowie der zeichnerischen Darstellung eines Ausführungsbeispiels. In der Zeichnung zeigen:
- Fig. 1: eine Frontansicht eines Ausführungsbeispiels eines erfindungsgemäßen Windschotts;
- Fig. 2: einen Schnitt längs Linie 2-2 in Fig. 1;
- Fig. 3: eine Explosionsdarstellung eines oberen Scharniers;
- Fig. 4: eine Explosionsdarstellung des oberen Scharniers in Richtung des Pfeils A in Fig. 3;
- Fig. 5: eine Draufsicht auf das obere Scharnier ähnlich Fig. 1 in vergrößerter Darstellung;
- Fig. 6: einen Schnitt längs Linie 6-6 in Fig. 5 und
- Fig. 7: einen Schnitt längs Linie 7-7 in Fig. 5.

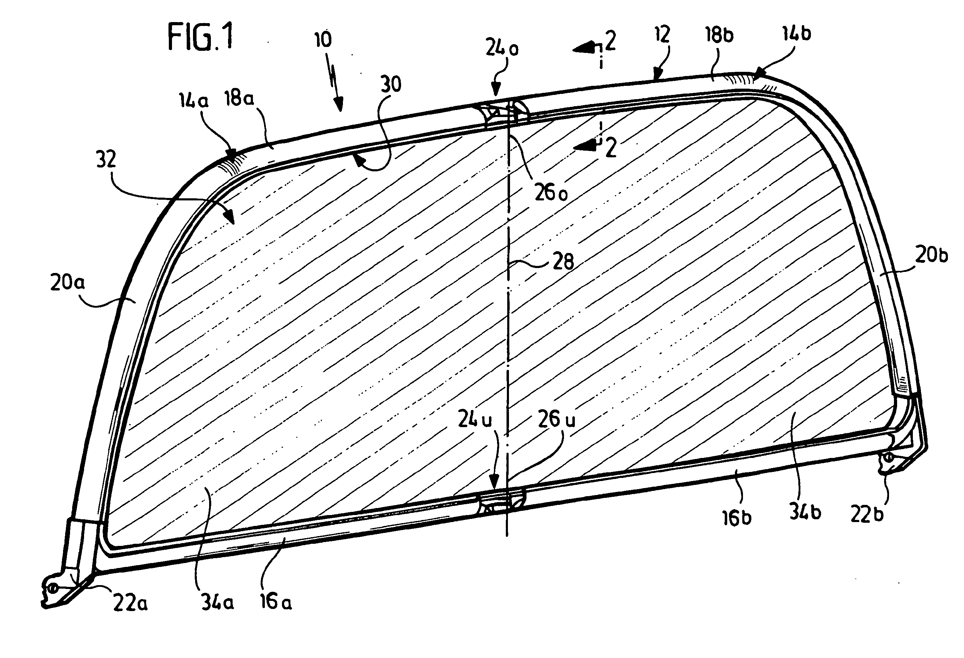

Ein Ausführungsbeispiel eines erfindungsgemäßen Windschotts, als Ganzes in Fig. 1 mit 10 bezeichnet, umfaßt einen Rahmen 12, der aus zwei Rahmenteilen 14a und 14b gebildet ist, wobei jedes dieser Rahmenteile 14 einen unteren Träger 16, einen oberen Träger 18 und einen Seitenträger 20 aufweist, wobei der Seitenträger 20 den unteren Träger 16 mit dem oberen Träger 18 verbindet.

Ferner ist an jedem der Rahmenteile 14 im Bereich des unteren Trägers 16 am Seitenträger 20 eine Montageeinrichtung 22 vorgesehen, mit welcher der Rahmen 12 an dem jeweiligen Cabriofahrzeug oder auch an einem anderen Teil, z. B. einer Rücksitzabdeckung, montierbar ist.

Beide Rahmenteile 14a und 14b sind durch zwei Scharniere 24o und 24u miteinander verbunden, wobei das Scharnier 24o die oberen Träger 18 der Rahmenteile 14 miteinander verbindet, während das Scharnier 24u die unteren Träger 16 der Rahmenteile 14 miteinander verbindet.

Beide Scharniere 24 sind um Drehachsen 26o bzw. 26u drehbar, wobei beide Drehachsen 26 koaxial zu einer gemeinsamen Klappachse 28 des Rahmens 12 angeordnet sind, so daß insgesamt die beiden Rahmenteile 14a und 14b relativ zueinander um die Klappachse 28 zwischen einer in Fig. 1 dargestellten aufgeklappten Stellung in eine zeichnerisch nicht dargestellte Stellung zusammenklappbar sind, in welcher die beiden Rahmenteile 14 aneinander anliegen und sich von der Klappachse 28 weg in dieselbe Richtung erstrecken.

Der Rahmen 12 umschließt eine als Ganzes mit 30 bezeichnete Rahmenöffnung, welche durch eine windabweisende Flachmaterialbahn 32 abgedeckt ist, die beispielsweise aus einem luftdurchlässigen, jedoch nicht winddurchlässigen Gewebe oder einer luftdurchlässigen Folie gebildet ist.

Die Flachmaterialbahn 32 erstreckt sich dabei mit einem Teilbereich 34a über den im Rahmenteil 14a liegenden Bereich der Rahmenöffnung 30 und mit einem Teilbereich 34b über den im Rahmenteil 14b liegenden Teilbereich der Rahmenöffnung 30.

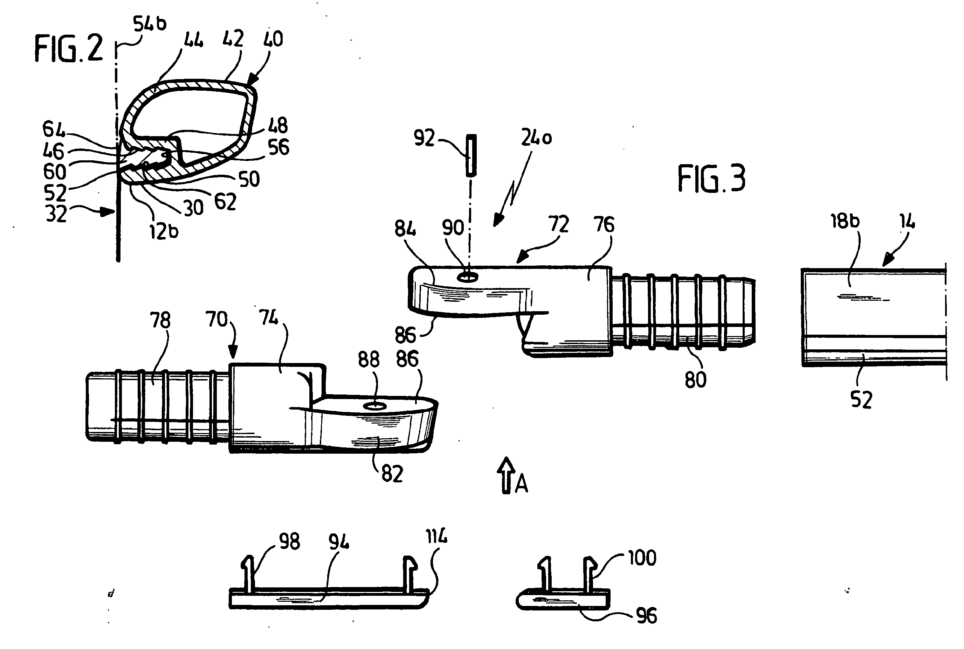

Wie in Fig. 2 am Beispiel eines Schnitts durch den oberen Träger 18 dargestellt, sind alle Träger 16, 18, 20 der Rahmenteile 14 als Hohlprofil 40, vorzugsweise aus Aluminium, ausgebildet, wobei dieses Hohlprofil 40 eine insgesamt um einen Hohlraum 42 herum verlaufende geschlossene Profilwand 44 aufweist, welche zur Bildung einer Aufnahmenut 46 einen in Richtung des Hohlraums 42 von einem näherungsweise elliptischen Verlauf der Profilwand 44 abweichend in Richtung des Hohlraums 42 eingezogenen Wandbereich 48 aufweist und eine im Abstand vom eingezogenen Wandbereich 48 verlaufende und parallel zu diesem sich erstreckende, einstückig an das Hohlprofil 40 angeformte Leiste 50, zwischen welchen die Aufnahmenut 46 liegt, wobei sich die Leiste 50 bis zu einer Führungskante 52 erstreckt, welche in einer vorzugsweise als Ebene ausgebildeten Aufspannfläche 54 liegt, welche die übrige Profilwand 44 des Hohlprofils 40 nicht schneidend verläuft, d. h., maximal die übrigen Bereiche der Profilwand 44 berührt oder im Abstand, vorzugsweise in geringem Abstand, von dieser verläuft.

Alternativ dazu ist es denkbar, anstelle des Hohlprofils 40 ein Profil aus Vollmaterial zu verwenden.

Die Flachmaterialbahn 32 erstreckt sich mit ihrem Halterand 56 in die Aufnahmenut 46 hinein und ist im Bereich der Träger 16, 18 und 20 durch einen in die Aufnahmenut 46 eingepreßten Keder 60 gehalten, wobei vorzugsweise zur Fixierung des Halterands 56 sowie des Keders 60 in der Aufnahmenut 46 die Leiste 50 und der Wandbereich 48 auf ihrer Nutinnenseite mit einer Verzahnung 62 versehen sind.

Der Keder 60 ist dabei so ausgebildet, daß er die Aufnahmenut 46 ausfüllt und eine Gegenverzahnung für die Verzahnung 62 aufweist sowie mit einer Kederoberseite 64 maximal bis zur Ebene 54 reicht und diese maximal berührt.

Zum Überdecken der Rahmenöffnung 30 ist die Flachmaterialbahn 32 über die Führungskante 52 gezogen und wird somit durch die Führungskanten 52 sämtlicher Träger 16, 18, 20 im Bereich der Rahmenteile 14a, b in der Aufspannfläche 54 für die Flachmaterialbahn 32 gehalten.

Die Aufspannflächen 54a, b der Rahmenteile 14a, b verlaufen dabei so, daß diese im Bereich der Scharniere 24a, 24b ineinander übergehen.

Erfindungsgemäß umfaßt jedes der Scharniere 24a, 24b, wie am Beispiel des Scharniers 24o in den Fig. 3 bis 7 dargestellt, ein bezüglich der Rahmenöffnung 30 innenliegendes Scharnierteil 70 und ein bezüglich der Rahmenöffnung 30 außenliegendes Scharnierteil 72, wobei jedes der Scharnierteile 70 und 72 ein Ansatzstück 74 bzw. 76 aufweist, welches mit einem Fortsatz 78 bzw. 80 in den Hohlraum 42 des jeweils angrenzenden Trägers, d. h. also beim oberen Scharnier 24o in die oberen Träger 18 und bei unteren Scharnier 24u in die unteren Träger 16, einsteckbar ist.

Ferner ist an dem Ansatzstück 74 des inneren Scharnierteils 70 ein Lagerelement 82 angeformt, welches an einem Lagerelement 84 des äußeren Scharnierteils getrennt durch eine gemeinsame Lagerfläche 86 anliegt. Dabei liegt das Lagerelement 82 auf der der Rahmenöffnung 30 zugewandten Seite der Lagerfläche 86, während das Lagerelement 84 auf der der Rahmenöffnung 30 abgewandten Seite der Lagerfläche 86 liegt.

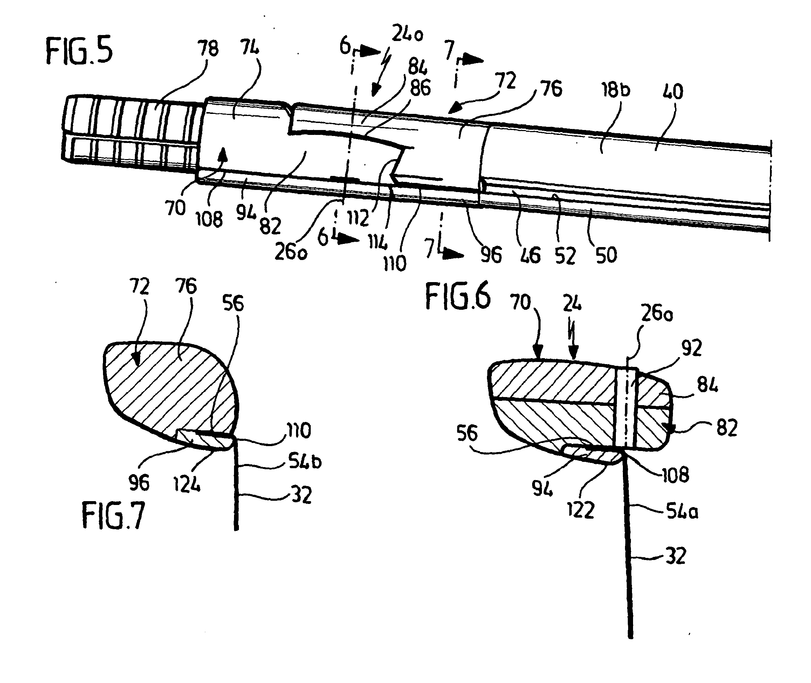

Wie in Fig. 5 dargestellt, liegen im montierten Zustand der Scharnierteile 70 und 72 die Lagerelemente 82 und 84 beiderseits der Lagerfläche 86 und somit unmittelbar aneinander und außerdem fluchten in den Lagerelementen 82 und 84 vorgesehene Bohrungen 88 und 90 miteinander, wobei diese von einem Lagerzapfen 92 durchsetzt sind, wobei eine Mittelachse des Lagerzapfens 92 die Drehachse 26 des jeweiligen Scharniers 24 bildet.

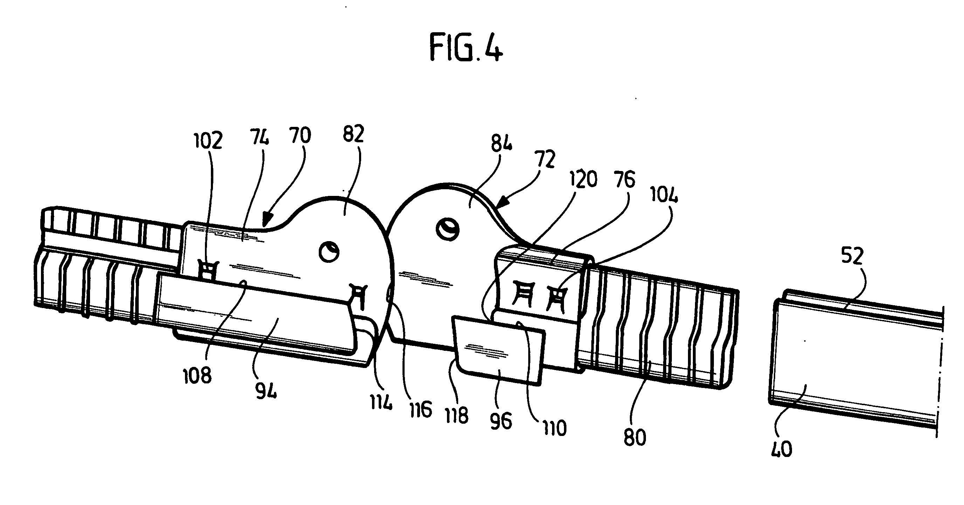

Zur Führung der Flachmaterialbahn im Bereich der Scharniere 24 sind die Scharnierteile 70 und 72, wie in Fig. 3 und 4 dargestellt, mit Kantenelementen 94 und 96 versehen, die mit Rastelementen 98 und 100 in Rastaufnahmen 102 und 104 der Scharnierteile 70 bzw. 72 verankerbar sind und Führungskanten 108 und 110 bilden, die mit den Führungskanten 52 der jeweils angrenzenden Hohlprofile 40 der entsprechenden Träger 16 oder 18 im an den Seitenteilen 70 und 72 montierten Zustand fluchten.

Da die die Führungskante 52 bildende Leiste 50 des Hohlprofils 40 vorzugsweise an der der Rahmenöffnung 30 zugewandten Seite bei allen Hohlprofilen 40 verläuft, erstreckt sich das Kantenelement 94 nicht nur über das Ansatzstück 74, sondern auch über das Lagerelement 82 des inneren Scharnierteils 70, wobei, wie in Fig. 6 dargestellt, bei zusammengebautem Scharnier 24 die Führungskante 108 bis nahe an die Drehachse 26 heran verläuft, so daß die Drehachse 26 die über die Führungskante 108 hinwegverlaufende Flachmaterialbahn 32 mittig schneidet.

Vorzugsweise schließt sich das Kantenelement 94 des inneren Scharnierteils 70 unmittelbar an das Hohlprofil 40 an, in welches der Fortsatz 78 eingesteckt ist und erstreckt sich über das Ansatzstücke 74 und das Lagerelement 82 hinweg bis zu einer Trennfuge 112, die zwischen dem Lagerelement 82 des inneren Lagerteils 70 und dem Ansatzstück 76 des äußeren Lagerelements besteht und endet mit einer Endkontur 114, welche einer Endkontur 116 des Lagerelements 82 des inneren Lagerteils 70 angepaßt ist.

Ferner schließt sich das Kantenelement 96 unmittelbar an das Hohlprofil 40 an, in welches der Fortsatz 80 eingesteckt ist und erstreckt sich bis zur Trennfuge 112, wobei eine Endkontur 118 des Kantenelements 96 einer Endkontur 120 des Ansatzstücks 76 angepaßt ist, mit welchem dieses an die Trennfuge 112 angrenzt.

Vorzugsweise sind die Endkonturen 116 des Lagerelements 82 und die Endkontur 120 des Ansatzstücks 76 so ausgebildet, daß sie bei vollständig auseinandergeklappten Rahmenteilen 14 aneinander anliegen und einen Anschlag bilden, welcher die vollständig auseinandergeklappte Stellung der Rahmenteile 14 festlegt.

Zweckmäßigerweise haben die Kantenelemente 94 und 96, wie in Fig. 6 und 7 dargestellt, eine Querschnittsform, welche im wesentlichen der Querschnittsform der Leiste 50 des Hohlprofils entspricht, so daß diese auch mit ihren der Rahmenöffnung 30 zugewandten Innenseiten 122 und 124 im an den Scharnierteilen 70 und 72 fixierten Zustand mit der entsprechenden Innenseite 126 des angrenzenden Hohlprofils im wesentlichen fluchten.

Die Kantenelemente 94 und 96 dienen, wie in Fig. 6 und 7 dargestellt, dazu, im Bereich der Scharnierteile 70 und 72 jedes Scharniers 24 den Halterand 56 der Flachmaterialbahn 32 aufzunehmen und mit den Führungskanten 108 und 110 die Flachmaterialbahn 32 so zu führen, daß die Aufspannflächen 54a und 54b exakt im Bereich der Klappachse 28 ineinander übergehen und somit durch die Klappachse 28 verlaufen.

Damit führt ein Klappen der Rahmenteile 14 um die Klappachse 28 zu keinerlei Zug oder Faltenwurf der Flachmaterialbahn 32, sofern der Halterand 56 zwischen der Trennfuge 112 und dem Bereich der Klappachse 28 ausgespart ist, wobei die Flachmaterialbahn 32 in diesem Bereich bis unmittelbar zum Lagerelement 82 des inneren Scharnierteils 70 verläuft.

## Patentansprüche

1. Windschott für Cabriofahrzeuge, umfassend
einen aus mindestens zwei Rahmenteilen (14) gebildeten Rahmen (12),
zwei die Rahmenteile (14) verbindende Scharniere (24), deren Drehachsen (26) koaxial zu einer gemeinsamen Klappachse (28) des Rahmens (12) angeordnet sind, und eine eine von dem Rahmen (12) umschlossene Rahmenöffnung (30) abdeckende und durch Aufnahmen (46) an dem Rahmen (12) aufgespannt gehaltene Flachmaterialbahn (32),
**dadurch gekennzeichnet, daß** an jedem Rahmenteil (14) eine Führungskante (52) für die Flachmaterialbahn (32) vorgesehen ist, über welche die Flachmaterialbahn (32) hinwegläuft und welche den sich in diesem Rahmenteil (14) erstreckenden Teilbereich (34) der Flachmaterialbahn (32) in einer seitlich an den Rahmen (12) angrenzenden Aufspannfläche (54) hält, und daß jede der Aufspannflächen (54a, 54b) im wesentlichen durch die Klappachse (28) hindurchverläuft.

2. Windschott nach Anspruch 1, **dadurch gekennzeichnet, daß** jedes Scharnier (24) zwei Scharnierteile (70, 72) mit drehbar aneinander geführten Lagerelementen (82, 84) und mit sich ausgehend von den Lagerelementen (82, 84) erstreckenden Ansatzstücken (74, 76) aufweist, die an den Rahmenflügeln (14) fixierbar sind.

3. Windschott nach Anspruch 2, **dadurch gekennzeichnet, daß** die Ansatzstücke (74, 76) einen im wesentlichen identischen Querschnitt aufweisen und bei aufgeklappten Rahmen (12) miteinander fluchtend angeordnet sind.

4. Windschott nach Anspruch 2 oder 3, **dadurch gekennzeichnet, daß** die Lagerelemente (82, 84) im Bereich einer Lagerfläche (86) aneinander anliegen.

5. Windschott nach einem der Ansprüche 2 bis 4, **dadurch gekennzeichnet, daß** an einem inneren Scharnierteil (70) das Ansatzstück (74) ein der Rahmenöffnung (30) zugewandtes, innenliegendes Lagerelement (82) trägt und an einem äußeren Scharnierteil (72) das Ansatzstück (76) ein der Rahmenöffnung (30) abgewandtes, außenliegendes Lagerelement (84) trägt.

6. Windschott nach einem der Ansprüche 2 bis 5, **dadurch gekennzeichnet, daß** die Rahmenteile (14) aus einem Hohlprofil (40) gebildet sind und daß die Scharnierteile (70, 72) mit Fortsätzen (78, 80) in das Hohlprofil (40) eingesteckt sind.

7. Windschott nach einem der voranstehenden Ansprüche, **dadurch gekennzeichnet, daß** die Führungskante (52) an einer der Rahmenöffnung (30) zugewandten Innenseite der Rahmenteile (14) verläuft.

8. Windschott nach Anspruch 7, **dadurch gekennzeichnet, daß** die Führungskante (52) im wesentlichen an die von den Rahmenteilen (14) umschlossene Rahmenöffnung (30) angrenzt.

9. Windschott nach einem der voranstehenden Ansprüche, **dadurch gekennzeichnet, daß** sich die Führungskante (52) der Rahmenteile (14) in einer Führungskante (108, 110) der Scharnierteile (70, 72) fortsetzt.

10. Windschott nach Anspruch 9, **dadurch gekennzeichnet, daß** sich bei dem inneren Scharnierteil (70) die Führungskante (108) über das Ansatzstück (74) und das Lagerelement (82) hinweg fortsetzt.

11. Windschott nach Anspruch 9 oder 10, **dadurch gekennzeichnet, daß** die Führungskante (108, 110) bis zu einer Trennfuge (112) zwischen dem Lagerelement (82) des inneren Scharnierteils (70) und dem Ansatzstück (76) des äußeren Scharnierteils (72) verläuft.

12. Windschott nach Anspruch 11, **dadurch gekennzeichnet, daß** die durch die beiden Scharnierteile (70, 72) beiderseits der Trennfuge (112) gebildeten Führungskanten (108, 110) bei aufgeklapptem Rahmen (12) miteinander fluchtend ausgerichtet sind.

13. Windschott nach einem der Ansprüche 9 bis 12, **dadurch gekennzeichnet, daß** die Scharnierteile (70, 72) mit die Führungskanten (108, 110) bildenden Kantenelementen (94, 96) versehen sind.

14. Windschott nach Anspruch 13, **dadurch gekennzeichnet, daß** die Kantenelemente (94, 96) an einer der Rahmenöffnung (30) zugewandten Innenseite der Scharnierteile (70, 72) angeordnet sind.

15. Windschott nach Anspruch 13 oder 14, **dadurch gekennzeichnet, daß** die durch die Kantenelemente (94, 96) gebildeten Führungskanten (108, 110) beider zusammengehöriger Scharnierteile (70, 72) bis zur Trennfuge (112) verlaufen.

16. Windschott nach Anspruch 15, **dadurch gekennzeichnet, daß** die von dem Kantenelement (94) des inneren Scharnierteils (70) gebildete Führungskante (108) die Drehachse (26) des Scharniers (24) nahezu berührend verläuft.

17. Windschott nach einem der Ansprüche 13 bis 16, **dadurch gekennzeichnet, daß** die Kantenelemente (94, 96) an den Scharnierteilen (70, 72) fixierbar sind.

18. Windschott nach Anspruch 17, **dadurch gekennzeichnet, daß** die Kantenelemente (94, 96) mit den Scharnierteilen (70, 72) verrastbar sind.

19. Windschott nach einem der Ansprüche 17 oder 18, **dadurch gekennzeichnet, daß** die Flachmaterialbahn (32) im Bereich jedes Scharniers (24) zwischen dem jeweiligen Kantenelement (94, 96) und dem entsprechenden Scharnierteil (70, 72) einklemmbar ist.

20. Windschott nach Anspruch 19, **dadurch gekennzeichnet, daß** die Flachmaterialbahn (32) durch Aufsetzen des Kantenelements (94, 96) am jeweiligen Scharnierteil (70, 72) fixierbar ist.

21. Windschott nach einem der voranstehenden Ansprüche, **dadurch gekennzeichnet, daß** sich in den Rahmenteilen (14) an die Führungskante (52) eine Aufnahmenut (46) anschließt, in welcher die Flachmaterialbahn (32) mittels eines Keders (60) fixierbar ist.

## Claims

1. Wind blocker for convertible vehicles, comprising
a frame (12) formed by at least two frame parts (14),
two hinges (24) which join the frame parts (14), and the axes of rotation (26) of which are arranged coaxially with a common fold axis (28) of the frame (12), and
a web of flat material (32) which covers a frame opening (30) enclosed by the frame (12) and is held spread out on the frame (12) by retainers (46),
**characterized in that** a guide edge (52) for the web of flat material (32) is provided on each frame part (14), the web of flat material (32) extends beyond the guide edge (52), and the guide edge (52) holds the partial area (34) of the web of flat material (32) extending in this frame part (14) in a spread-out area (54) laterally adjacent to the frame (12), and **in that** each of the spread-out areas (54a, 54b) extends substantially through the fold axis (28).

2. Wind blocker in accordance with claim 1, **characterized in that** each hinge (24) comprises two hinge parts (70,72) with bearing elements (82, 84) which are rotatably guided on each other and with extension pieces (74, 76) which extend from the bearing elements (82, 84) and are fixable on the frame wings (14).

3. Wind blocker in accordance with claim 2, **characterized in that** the extension pieces (74, 76) have a substantially identical cross section and are arranged in alignment with each other when the frame (12) is folded out.

4. Wind blocker in accordance with claim 2 or 3, **characterized in that** the bearing elements (82, 84) rest against each other in the area of a bearing surface (86).

5. Wind blocker in accordance with any one of claims 2 to 4, **characterized in that** on an inner hinge part (70), the extension piece (74) carries an inwardly lying bearing element (82) facing the frame opening (30), and on an outer hinge part (72), the extension piece (76) carries an outwardly lying bearing element (84) facing away from the frame opening (30).

6. Wind blocker in accordance with any one of claims 2 to 5, **characterized in that** the frame parts (14) are made from a hollow section (40), and **in that** the hinge parts (70, 72) are inserted with extensions (78, 80) into the hollow section (40).

7. Wind blocker in accordance with any one of the preceding claims, **characterized in that** the guide edge (52) extends on a inner side of the frame parts (14) that faces the frame opening (30).

8. Wind blocker in accordance with claim 7, **characterized in that** the guide edge (52) substantially adjoins the frame opening (30) enclosed by the frame parts (14).

9. Wind blocker in accordance with any one of the preceding claims, **characterized in that** the guide edge (52) of the frame parts (14) continues in a guide edge (108, 110) of the hinge parts (70, 72).

10. Wind blocker in accordance with claim 9, **characterized in that** the guide edge (108) on the inner hinge part (70) continues beyond the extension piece (74) and the bearing element (82).

11. Wind blocker in accordance with claim 9 or 10, **characterized in that** the guide edge (108, 100) extends as far as a parting line (112) between the bearing element (82) of the inner hinge part (70) and the extension piece (76) of the outer hinge part (72).

12. Wind blocker in accordance with claim 11, **characterized in that** the guide edges (108, 110) formed by the two hinge parts (70, 72) on either side of the parting line (112) are in alignment with each other when the frame (12) is folded out.

13. Wind blocker in accordance with any one of claims 9 to 12, **characterized in that** the hinge parts (70, 72) are provided with edge elements (94, 96) forming the guide edges (108, 110).

14. Wind blocker in accordance with claim 13, **characterized in that** the edge elements (94, 96) are arranged on an inner side of the hinge parts (70, 72) that faces the frame opening (30).

15. Wind blocker in accordance with claim 13 or 14, **characterized in that** the guide edges (108, 110), formed by the edge elements (94, 96), of the two mating hinge parts (70, 72) extend as far as the parting line (112).

16. Wind blocker in accordance with claim 15, **characterized in that** the guide edge (108) formed by the edge element (94) of the inner hinge part (70) extends so as to almost touch the axis of rotation (26) of the hinge (24).

17. Wind blocker in accordance with any one of claims 13 to 16, **characterized in that** the edge elements (94, 96) are fixable on the hinge parts (70, 72).

18. Wind blocker in accordance with claim 17, **characterized in that** the edge elements (94, 96) are lockable on the hinge parts (70,72).

19. Wind blocker in accordance with claim 17 or 18, **characterized in that** the web of flat material (32) is clampable in the area of each hinge (24) between the respective edge element (94, 96) and the corresponding hinge part (70, 72).

20. Wind blocker in accordance with claim 19, **characterized in that** the web of flat material (32) is fixable to the respective hinge part (70, 72) by placing the edge element (94, 96) thereon.

21. Wind blocker in accordance with any one of the preceding claims, **characterized in that** a retaining groove (46), in which the web of flat material (32) is fixable by means of a weather strip (60), adjoins the guide edge (52) in the frame parts (14).

## Revendications

1. Protecteur de vent pour voitures décapotables, comprenant :
un cadre (12) formé par deux éléments de cadre (14) au moins,
deux charnières (24) reliant les éléments de cadre (14), dont les axes de rotation (26) sont disposés de façon coaxiale par rapport à un axe de rabattement (28) commun du cadre (12) et
une bande de matériau plat (32) maintenue de manière tendue par des rainures d'hébergement (46) prévues dans le cadre (12), recouvrant une ouverture (30) cernée par ledit cadre (12),
**caractérisé en ce qu'**une arête de guidage (52) destinée à la bande de matériau plat (32) est prévue sur chacun des éléments de cadre (14), ladite bande de matériau plat (32) allant au delà de l'arête de guidage et maintenant le secteur partiel (34) de la bande de matériau plat (32) s'étendant dans cet élément de cadre (14) dans une surface de fixation (54) latéral adjacent au cadre (12), et **en ce que** chacune des surfaces de fixation (54a, 54b) passe essentiellement à travers l'axe de rabattement (28).

2. Protecteur de vent selon la revendication 1, **caractérisé en ce que** chaque charnière (24) comprend deux éléments charnière (70, 72) avec des éléments d'appui (82, 84) pivotants et voisins et des rallonges (74, 76) s'étendant depuis lesdits éléments d'appui (82, 84) et pouvant être fixées aux ailes (14) du cadre.

3. Protecteur de vent selon la revendication 2, **caractérisé en ce que** les rallonges (74, 76) présentent une section essentiellement identique et sont alignées entre elles lorsque le cadre (12) est rabattu.

4. Protecteur de vent selon la revendication 2 ou 3, **caractérisé en ce que** les éléments d'appui (82, 84) sont attenants au niveau d'une surface d'appui (86).

5. Protecteur de vent selon l'une quelconque des revendications 2 à 4, **caractérisé en ce que** sur un élément charnière (70) intérieur, la rallonge (74) supporte un élément d'appui (82) intérieur faisant face à l'ouverture du cadre (30) et **en ce que** sur un élément charnière (72) extérieur, la rallonge (76) supporte un élément d'appui (84) extérieur opposé au côté à l'ouverture du cadre (30).

6. Protecteur de vent selon l'une quelconque des revendications 2 à 5, **caractérisé en ce que** les éléments de cadre (14) sont constitués par un profilé creux (40) et **en ce que** les éléments charnière (70, 72) sont insérés avec des prolongements (78, 80) dans ledit profilé creux (40).

7. Protecteur de vent selon l'une quelconque des revendications précédentes, **caractérisé en ce que** l'arête de guidage (52) longe un côté intérieur des éléments de cadre (14) faisant face à l'ouverture du cadre (30).

8. Protecteur de vent selon la revendication 7, **caractérisé en ce que** l'arête de guidage (52) est essentiellement adjacente à l'ouverture (30) du cadre définie par les éléments de cadre (14).

9. Protecteur de vent selon l'une quelconque des revendications précédentes, **caractérisé en ce que** l'arête de guidage (52) des éléments de cadre (14) se poursuit dans une arête de guidage (108, 110) des éléments charnières (70, 72).

10. Protecteur de vent selon la revendication 9, **caractérisé en ce que** l'arête de guidage (108) de l'élément charnière intérieur (70) se poursuit au delà de la rallonge (74) et de l'élément d'appui (82).

11. Protecteur de vent selon la revendication 9 ou 10, **caractérisé en ce que** l'arête de guidage (108, 110) s'étend jusqu'à un joint de rupture (112) situé entre l'élément d'appui (82) de l'élément charnière intérieur (70) et la rallonge (76) de l'élément charnière extérieur (72).

12. Protecteur de vent selon la revendication 11, **caractérisé en ce que** les arêtes de guidage (108, 110) formées par les deux éléments charnière (70, 72) des deux côtés du joint de rupture (112) sont alignées entre elles lorsque le cadre (12) est rabattu.

13. Protecteur de vent selon l'une quelconque des revendications 9 à 12, **caractérisé en ce que** les éléments charnière (70, 72) sont équipés d'éléments d'arête (94, 96) formant les arêtes de guidage (108, 110).

14. Protecteur de vent selon la revendication 13, **caractérisé en ce que** les éléments d'arête (94, 96) sont disposés sur un côté intérieur des éléments charnière (70, 72), faisant face à l'ouverture du cadre (30).

15. Protecteur de vent selon la revendication 13 ou 14, **caractérisé en ce que** les arêtes de guidage (108, 110) formées par les éléments d'arête (94, 96) des deux éléments charnière (70, 72) connexes s'étendent jusqu'au joint de rupture (112).

16. Protecteur de vent selon la revendication 15, **caractérisé en ce que** l'arête de guidage (108) formée par l'élément d'arête (94) de l'élément charnière (70) intérieur longe l'axe de rotation (26) de la charnière (24) en le touchant à peu de chose près.

17. Protecteur de vent selon l'une quelconque des revendications 13 à 16, **caractérisé en ce que** les éléments d'arête (94, 96) peuvent être fixés aux éléments charnière (70, 92).

18. Protecteur de vent selon la revendication 17, **caractérisé en ce que** les éléments d'arête (94, 96) peuvent être verrouillés dans les éléments charnière (70, 72).

19. Protecteur de vent selon l'une quelconque des revendications 17 ou 18, **caractérisé en ce que** la bande de matériau plat (32) peut être enserrée au niveau de chaque charnière (24), entre l'élément d'arête (94, 96) et l'élément charnière (70, 72) correspondant.

20. Protecteur de vent selon la revendication 19, **caractérisé en ce que** la bande de matériau plat (32) peut être fixée à l'élément charnière (70, 72) en posant l'élément d'arête (94, 96) dessus.

21. Protecteur de vent selon l'une quelconque des revendications précédentes, **caractérisé en ce que** dans les éléments de cadre (14) une rainure d'hébergement (46) est contiguë à l'arête de guidage (52), rainure dans laquelle la bande de matériau plat (32) peut être fixée à l'aide d'un bourrelet (60).
